# EUROPÄISCHE PATENTANMELDUNG

(11) **EP 2 587 274 A1**
(43) Veröffentlichungstag der Anmeldung: **01.05.2013**
(21) Anmeldenummer: 12190064.1
(22) Anmeldetag: 25.10.2012
(51) Int. Cl.: G01R 31/40

(54) **Verfahren zur Überwachung von Photovoltaikmodulen**

(30) Priorität: 28.10.2011 DE 102011085392
(71) Anmelder: IMS Connector Systems GmbH, 79843 Löffingen (DE)
(72) Erfinder: Baur, Roland, 78126 Königsfeld (DE)
(74) Vertreter: Patentanwälte Westphal, Mussgnug & Partner

(57) **Zusammenfassung**

Die Erfindung betrifft ein Verfahren zur Überwachung von in Reihe verschalteten Photovoltaikmodulen (1), indem mindestens eine Statusinformation des jeweiligen Photovoltaikmoduls (1) detektiert und an eine Auswerteeinheit (10) übermittelt wird; erfindungsgemäß ist vorgesehen, dass die bei zunehmender Beleuchtungsstärke von den jeweiligen Photovoltaikmodulen (1) erzeugte Rampenspannung (Uᵣ, Uᵣ₁, Uᵣ₂) mit einem vorgegebenen Schwellwert (SW₁) verglichen wird, bei Erreichen des ersten Schwellwertes (SW₁) durch die ansteigende Rampenspannung (Uᵣ, Uᵣ₁, Uᵣ₂) eine Übermittlung einer ersten Statusinformation an die Auswerteeinheit (10) durchgeführt wird und zur Bewertung der Leistungsfähigkeit eines Photovoltaikmoduls (1) die Zeitpunkte (t₁, t₂ t₃) des ersten Empfangs der Statusinformation der jeweiligen Photovoltaikmodule (1) durch die Auswerteeinheit (10) ausgewertet werden. Ferner betrifft die Erfindung eine Photovoltaikanlage zur Durchführung des erfindungsgemäßen Verfahrens.

## Beschreibung

Die Erfindung betrifft ein Verfahren zur Überwachung von Photovoltaikmodulen gemäß Oberbegriff des Patentanspruchs 1. Ferner betrifft die Erfindung eine Photovoltaikanlage zur Durchführung des erfindungsgemäßen Verfahrens.

Aus der DE 10 2009 031 839 A1 ist ein gattungsbildendes Verfahren bekannt, bei dem zur Überwachung von mehreren mittels elektrischen Leitungsmitteln in Reihe verschaltete Photovoltaikmodulen jedem Photovoltaikmodul ein eigener Mikrocontroller zugeordnet ist, der eine fortlaufende Feststellung mindestens eines Statusparameters des jeweiligen Photovoltaikmoduls durchführt und die den Statusparameter betreffenden Daten an eine Auswerteeinheit überträgt. Bei diesem bekannten Verfahren werden die zur Übertragung an die Auswerteeinheit vorgesehenen Daten, die in Form von Datenblöcken mit Statusdaten sowie Datenelementen zur Identifizierung der jeweiligen Photovoltaikmodule konzipiert sind, über die vorhandenen elektrischen Leitungsmittel versendet, wobei Datenblöcke unabhängig voneinander von dem Mikrocomputer zeitverzögert übertragen werden, so dass die Wahrscheinlichkeit der Kollision von Datenblöcken untereinander größer als Null ist.

Mit diesem bekannten Verfahren soll bei vergleichsweise niedrigen Realisierungskosten eine effiziente Überprüfung der Leistungsfähigkeit einzelner Photovoltaikmodule durchgeführt werden. Der Nachteil der zugelassenen Kollision von Datenblöcken während ihrer Übertragung zur Auswerteeinheit wird zugunsten einer kostengünstigen Realisierung dieses Verfahrens bewusst in Kauf genommen.

Weiterhin offenbart die o. g. DE 10 2009 031 839 A1 ein Photovoltaikmodul, welches eine Prüfvorrichtung zur Durchführung dieses bekannten Verfahrens umfasst. Auch wird eine Photovoltaikanlage mit mehreren solcher in Serie geschalteten Photovoltaikmodulen beschrieben, welche eine Auswerteeinheit zum Empfang der Signale der Prüfeinrichtungen der jeweiligen Photovoltaikmodule umfasst.

Der Aufwand an Hardware eines solchen bekannten Photovoltaikmoduls ist trotz der zugelassenen Kollision bei der Datenübertragung sehr aufwendig, da die Erzeugung von digitalen Datenpaketen und das digitale Übertragungsverfahren über die elektrischen Leitungen für jede Prüfeinrichtung den Hard- und Softwareaufwand erhöht.

Ferner beschreibt die DE 20 2008 012 345 U1 eine Vorrichtung zur Überwachung einzelner Photovoltaikmodule einer Photovoltaikanlage, bei der zur Überwachung der einzelnen Photovoltaikmodule jeweils eine Prüfvorrichtung als Teil eines Überwachungssystems mit einer zentralen Überwachungsstation vorgesehen ist. Dabei ist jede Prüfvorrichtung in der Nähe des jeweiligen Photovoltaikmoduls angeordnet und elektrisch mit derselben verbunden. Die Übertragung von Statusinformationen, wie elektrische Parameter eines Photovoltaikmoduls an die zentrale Überwachungsstation erfolgt nicht permanent, sondern intervallweise. Initiiert wird eine solche Übertragung auch unabhängig von einer Abfrage der zentralen Überwachungsstation durch die dezentralen Prüfvorrichtungen. Dabei werden die elektrischen Parameter zusammen mit einem photovoltaikmodulspezifischen Kennwert sukzessive von einer Prüfvorrichtung zur nächsten Prüfvorrichtung übermittelt, bis die Statusinformationen aller Photovoltaikmodule in einem Sammeltelegramm vorliegen, das dann von der zentralen Überwachungsstation empfangen und ausgewertet wird.

Auch eine Anlage aus solchen bekannten Photovoltaikmodulen gemäß dieser DE 20 2008 012 345 U1 ist nur mit einem hohen Aufwand an Hardware zu realisieren, da bspw. jede Prüfvorrichtung Hf-Sende- und Empfangsmittel aufweist, mit welchen einerseits die elektrischen Parameter der benachbarten Photovoltaikmodule empfangen und ausgewertet werden und andererseits ein neues Datenpaket mit den elektrischen Parametern des angeschlossenen Photovoltaikmoduls erzeugt und gesendet werden muss.

Der Erfindung liegt die Aufgabe zugrunde, ein Verfahren der eingangs genannten Art zu schaffen, welches mit geringem Hardwareaufwand eine sichere Bewertung der Leistungsfähigkeit von Photovoltaikmodulen ermöglicht. Eine weitere Aufgabe besteht darin, eine Photovoltaikanlage zur Durchführung dieses erfindungsgemäßen Verfahrens anzugeben.

Die erstgenannte Aufgabe wird gelöst durch ein Verfahren mit den Merkmalen des Patentanspruchs 1.

Ein solches Verfahren zur Überwachung von in Reihe verschalteten Photovoltaikmodulen, bei welchem mindestens eine Statusinformation des jeweiligen Photovoltaikmoduls detektiert und an eine Auswerteeinheit übermittelt wird, zeichnet sich erfindungsgemäß dadurch aus, dass die bei zunehmender Beleuchtungsstärke von den jeweiligen Photovoltaikmodulen erzeugte Rampenspannung mit einem vorgegebenen Schwellwert verglichen wird, bei Erreichen des vorgegebenen Schwellwertes durch die ansteigende Rampenspannung eine Übermittlung einer ersten Statusinformation an die Auswerteeinheit durchgeführt wird und zur Bewertung der Leistungsfähigkeit eines Photovoltaikmoduls die Zeitpunkte des Empfangs der ersten Statusinformation der jeweiligen Photovoltaikmodule durch die Auswerteeinheit ausgewertet werden.

Dieses erfindungsgemäße Verfahren nutzt die Erkenntnis, dass mit aufgehender Sonne, also bei beginnender Morgendämmerung die Beleuchtungsstärke zunimmt und dabei die Spannung an jedem Photovoltaikmodul von dem Wert Null beginnend bis zu einem modulspezifischen Höchstwert ansteigt, wobei der Anstiegsgradient und der Höchstwert der Modulspannung von der Leistungsfähigkeit, also dem Wirkungsgrad des Photovoltaikmoduls abhängt. So zeigt ein Photovoltaikmodul mit schlechtem Wirkungsgrad gegenüber einem Photovoltaikmodul mit einem den Spezifikationen entsprechenden hohen Wirkungsgrad einen geringeren Anstiegsgradienten, so dass eine vorgegebene Modulspannung, also ein bestimmter Schwellwert von solchen Photovoltaikmodulen zu unterschiedlichen Zeitpunkten erreicht wird und daher diese Zeitpunkte geeignet sind, die Leistungsfähigkeit der Photovoltaikmodule einer Photovoltaikanlage zu bewerten. Die Statusinformation besteht im einfachsten Fall lediglich in dem Zeitpunkt, in dem die Rampenspannung eines Photovoltaikmoduls den ersten Schwellwert erreicht hat, welcher im Wesentlichen dem Zeitpunkt des Empfangs der ersten Statusinformation durch die Auswerteeinheit entspricht.

Dabei kann nicht nur der alterungsbedingte Rückgang des Wirkungsgrades bewertet werden, sondern auch der bspw. durch eine Verschmutzung oder eine anderweitig erzeugte Beschattung bewirkte Rückgang des Wirkungsgrades erkannt werden.

Dieses erfindungsgemäße Verfahren lässt sich mit wenigen Mitteln realisieren, da von der Auswerteeinheit lediglich die Zeitpunkte erfasst werden, an denen die Statusinformation der jeweiligen Photovoltaikmodule empfangen wird. Die ersten Statusinformationen werden dann übertragen, wenn der vorgegebene Schwellwert erreicht wird.

In einer vorteilhaften Ausgestaltung der Erfindung werden zur Bewertung der Zeitpunkte des Empfangs der ersten Statusinformationen die Zeitdifferenzen zwischen dem frühesten Zeitpunkt und den jeweiligen späteren Zeitpunkten bestimmt und ausgewertet. Dieses Verfahren kann softwaremäßig einfach durchgeführt werden.

Da die entsprechenden Zeitpunkte modulspezifisch ermittelt werden, liegt für jedes Photovoltaikmodul der leistungsspezifische Zustand vor, so dass gegebenenfalls erforderliche Maßnahmen sofort eingeleitet werden können.

Zur Ermittlung der modulspezifischen Zeitpunkte umfasst gemäß einer Weiterbildung der Erfindung die Übermittlung der ersten Statusinformation eines Photovoltaikmoduls auch die Übermittlung eines Identifikationsmerkmals, vorzugsweise eine Identifizierungsnummer dieses Photovoltaikmoduls.

In vorteilhafter Weise kann die Übermittlung der ersten Statusinformation an die Auswerteeinheit drahtlos oder drahtgebunden durchgeführt wird.

Schließlich ist nach einer Ausgestaltung der Erfindung vorgesehen, dass die Auswerteeinheit für die Erstinbetriebnahme der Photovoltaikmodule alle Identifizierungsnummern eines zur Identifizierung von Photovoltaikmodulen vorgesehenen Nummernkreises sukzessive aufruft, diejenigen Photovoltaikmodule, welche ihre Identifikationsnummer in dem Aufruf der Auswerteeinheit erkennen, ihrerseits an die Auswerteeinheit ihre Identifikationsnummer übermitteln und diejenigen Identifizierungsnummern von der Auswerteinheit gespeichert werden, die ein Photovoltaikmodul übermittelt hat.

Damit müssen die einzelnen Identifizierungsnummern von Photovoltaikmodulen einer Photovoltaikanlage vor der ersten Inbetriebnahme nicht mehr manuell in die Auswerteeinheit eingegeben werden, sondern in diesem sogenannten Lernmodus der Auswerteeinheit werden die Photovoltaikmodule über ihre Identifizierungsnummer automatisch registriert und hierüber angesprochen bzw. abgefragt.

Die zweitgenannte Aufgabe wird gelöst durch eine Photovoltaikanlage mit den Merkmalen des Patentanspruchs 6.

Eine solche Photovoltaikanlage mit in Reihe geschalteten Photovoltaikmodulen und einer Auswerteeinheit, bei der die Photovoltaikmodule über elektrische Verbindungsmittel seriell verschaltet sind und jedes Photovoltaikmodul eine Prüfeinrichtung umfasst, zeichnet sich erfindungsgemäß dadurch aus, dass zur Erfassung der von jedem Photovoltaikmodul bei zunehmender Lichtintensität erzeugten Rampenspannung jede Prüfeinrichtung mit dem ihr zugeordneten Photovoltaikmodul elektrisch verbunden ist, jede Prüfeinrichtung ausgebildet ist, die Rampenspannung mit einem vorgegebenen Schwellwert zu vergleichen und bei Erreichen dieses vorgegebenen Schwellwertes eine Übermittlung einer ersten Statusinformation an die Auswerteeinheit durchzuführen und zur Bewertung der Leistungsfähigkeit eines Photovoltaikmoduls die Auswerteeinheit ausgebildet ist, die Zeitpunkte des Empfangs der ersten Statusinformation der jeweiligen Photovoltaikmodule auszuwerten.

Die für eine solche erfindungsgemäße Photovoltaikanlage erforderliche Prüfeinrichtung kann einfach aufgebaut werden, da hierzu im einfachsten Fall lediglich ein Pegeldetektor zur Erfassung der Modulspannung und zum Vergleich mit dem vorgegebenen Schwellwert erforderlich ist.

Insbesondere bietet es sich weiterbildungsgemäß an, für die Prüfeinrichtung einen Mikrocontroller zu verwenden, der in der Regel bereits mit einer Brownout-Detektor-Schaltung und einer POR (Power-On-Reset)-Funktion ausgestattet ist. Mit einer solchen Brownout-Detektor-Schaltung wird die langsam ansteigende Rampenspannung eines Photovoltaikmoduls, die direkt als Versorgungsspannung für den Mikrocontroller dient, überwacht und bei Erreichen des vorgegebenen Schwellwertes der Mikrocontroller durch ein POR-Signal "aufgeweckt" d. h. initialisiert, um die erste Statusinformation zu übermitteln.

Schließlich ist gemäß einer vorteilhaften Weiterbildung der Erfindung die Auswerteeinheit zur Bewertung der Zeitpunkte des Empfangs der ersten Statusinformationen ausgebildet, die Zeitdifferenz zwischen dem frühesten Zeitpunkt und den jeweiligen späteren Zeitpunkten zu bestimmen.

Die Erfindung wird nachfolgend anhand eines Ausführungsbeispiels unter Bezugnahme auf die beigefügten Figuren ausführlich beschrieben. Es zeigen:
- Figur 1: ein schematisches Blockschaltbild einer Photovoltaikanlage mit Photovoltaikmodulen gemäß der Erfindung,
- Figur 2: ein Zeit-Beleuchtungsstärke-Diagramm zur Darstellung des Verlaufs der Beleuchtungsstärke für ein Photovoltaikmodul im Übergang von einem Nacht-Zustand in den Tag-Zustand,
- Figur 3: ein Zeit-Spannungsdiagramm mit unterschiedlichen Verläufen der Rampenspannung von Photovoltaikmodulen im Übergang vom Nacht-Zustand in den Tag-Zustand zur Erläuterung des erfindungsgemäßen Verfahrens, und
- Figur 4: ein Ablaufdiagramm zur Erläuterung eines Ausführungsbeispiels des erfindungsgemäßen Verfahrens.

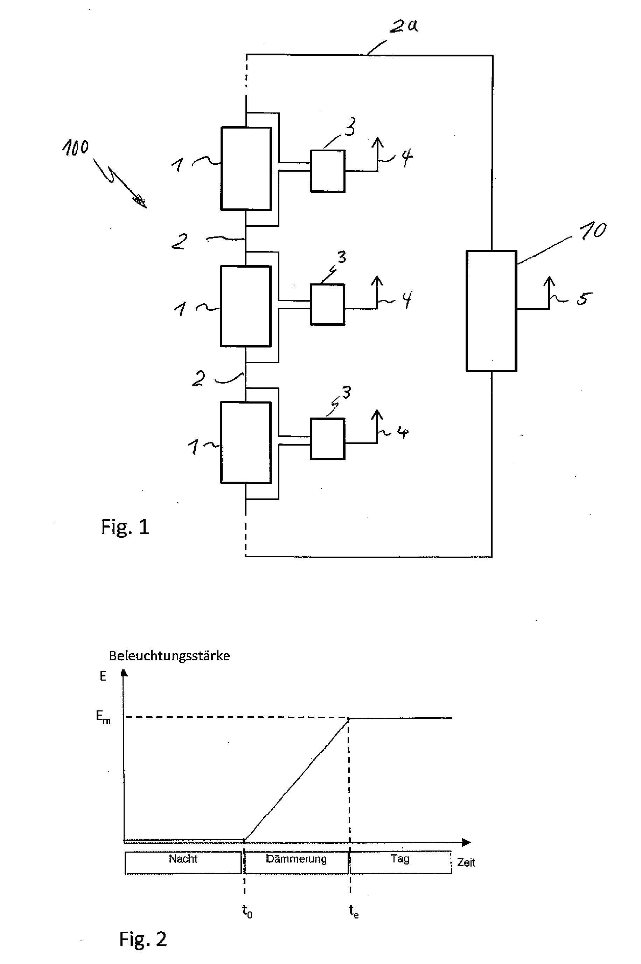

Figur 1 zeigt eine Photovoltaikanlage 100 mit mehreren in Serie über elektrische Leitungen 2 verbundene Photovoltaikmodule 1, wobei diese Serienschaltung an eine Auswerteeinheit 10 über eine elektrische Leitung 2a verbunden und gleichzeitig an einen elektrischen Verbraucher (nicht dargestellt) weitergeführt ist.

Weiterhin ist jedem Photovoltaikmodul 1 ein Mikrocontroller als Prüfeinrichtung 3 zugeordnet, der jeweils zur Erfassung der Modulspannung U elektrisch mit dem Spannungsausgang des Photovoltaikmoduls 1 verbunden ist. Jeder dieser Mikrocontroller 3 ist mit Sende- und Empfangsmitteln 4 ausgestattet, um mit entsprechenden Sende- und Empfangsmitteln 5 der Auswerteeinheit 10 drahtlos kommunizieren zu können.

Ein solcher Mikrocontroller 3 enthält im einfachsten Fall einen Pegeldetektor zur Erfassung der Modulspannung U, die vom Ausgang eines Photovoltaikmoduls 1 als Betriebsspannung zur Verfügung gestellt wird. Wenn diese Modulspannung U eines Photovoltaikmoduls 1 einen vorgegebenen Schwellwert SW₁ erreicht, wird der Mikrocontroller 3 automatisch initialisiert, bzw. "aufgeweckt".

Zur Realisierung dieses "Aufweckens" bzw. dieser Initialisierung ist der Mikrocontrollers 3 mit einer Brownout-Detektor-Schaltung und einer POR (Power-On-Reset)-Funktion ausgestattet, deren Funktion bereits in der Beschreibungseinleitung beschrieben wurde.

Zudem weist der Mikrocontroller 3 einen A/D-Wandler auf, der als Messeingang zur exakten Messung der von einem Photovoltaikmodul 1 erzeugten Modulspannung U verwendet werden kann.

Eine Pufferbatterie ist daher nicht erforderlich, da der Mikrocontroller 3 als Prüfeinrichtung seine Betriebsspannung von dem im zugeordneten Photovoltaikmodul 1 erhält, also die Modulspannung U als Betriebsspannung an dem Mikrocontroller 3 direkt anliegt.

Die Überwachung der Photovoltaikmodule 1 beginnt bereits im Übergang vom Nacht-Zustand in den Tag-Zustand, also mit Beginn der Morgendämmerung. Den entsprechenden Verlauf der Beleuchtungsstärke E über diesen Zeitbereich zeigt beispielhaft Figur 2.

Gemäß dieser Figur 2 ist die Beleuchtungsstärke E für die Photovoltaikmodule 1 während der Nacht Null und beginnt mit Beginn der Morgendämmerung zum Zeitpunkt tₒ im Wesentlichen linear bis zu einem Maximalwert Eₘ anzusteigen, der zum Zeitpunkt tₑ erreicht ist.

Die von den Photovoltaikmodulen 1 erzeugte Modulspannung U ist natürlich während der Nacht Null und steigt mit Beginn der Morgendämmerung zum Zeitpunkt t₀ im Wesentlichen proportional mit der Beleuchtungsstärke E bis auf eine maximale Modulspannung Um an. Diese Modulspannung Um wird bereits vor dem Maximalwert Eₘ der Beleuchtungsstärke E erreicht.

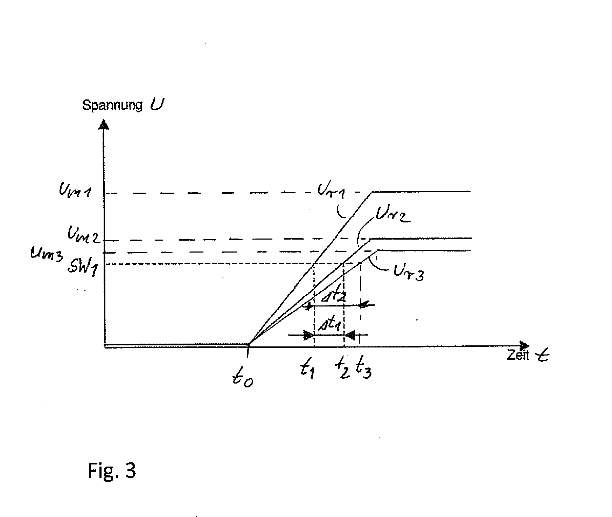

Das Zeit-Spannungs-Diagramm gemäß Figur 3 zeigt den Verlauf von Rampenspannungen Uᵣ₁, Uᵣ₂ und Uᵣ₃ von drei Photovoltaikmodulen 1 mit unterschiedlichen Anstiegsgradienten, wobei der Anstiegsgradient der Rampenspannung Uᵣ₁ am größten und derjenige der Rampenspannung Uᵣ₃ am kleinsten ist. Diese Rampenspannungen Uᵣ₁, Uᵣ₂ und Uᵣ₃ erreichen jeweils auch unterschiedliche Endewerte Uₘ₁, Uₘ₂ und Uₘ₃.

Die Größe des Anstiegsgradienten einer Rampenspannung Uᵣ sowie der Endwert Um hängt von der Leistungsfähigkeit, also vom Wirkungsgrad des jeweiligen Photovoltaikmoduls 1 ab. Ein Photovoltaikmodul 1 mit maximalem Wirkungsgrad erzeugt eine Rampenspannung Uᵣ₁ mit einem Endwert Uₘ₁ der Modulspannung U, die zum Zeitpunkt t₁ einen vorgegebenen Schwellwert SW₁ erreicht. Ein geringerer Wirkungsgrad führt zu einem flacheren Anstieg der Rampenspannung Uᵣ₂ und Uᵣ₃, so dass der vorgegebene Schwellwert SW₁ zu einem späteren Zeitpunkt t₂ bzw. t₃ erreicht wird.

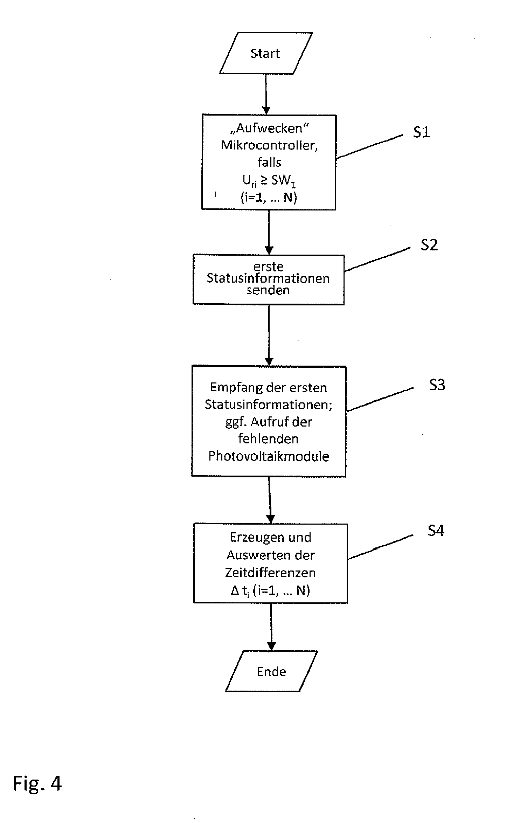

Die Leistungsfähigkeit bzw. der Wirkungsgrad eines Photovoltaikmoduls 1 kann daher anhand dieser Zeitpunkte t₁, t₂ und t₃ ausgewertet werden, indem die Zeitdifferenzen Δt₁=|t₁-t₂| und Δt₂=|t₁-t₃| zwischen dem frühesten Zeitpunkt, also dem Zeitpunkt t₁ und den jeweils späteren Zeitpunkten, also den Zeitpunkten t₂ und t₃ ausgewertet werden. Dieses Verfahren wird anhand des Ablaufdiagrammes gemäß Figur 4 nachfolgend erläutert, wonach N Mikrocontroller als Prüfeinrichtungen 3 die Rampenspannungen Uᵣ₁, ... U_{rN} von N Photovoltaikmodulen 1 detektieren. In der Photovoltaikanlage 100 gemäß Figur 1 ist N=3.

Gemäß einem Schritt S1 wird mittels einer in jedem Mikrocontroller 3 vorhandenen Brownout-Detektor-Schaltung die von dem jeweiligen Photovoltaikmodul 1 erzeugte Rampenspannung Uᵣᵢ (i=1, ... N) überwacht und mittels eines POR-Signals der Mikrocontroller 3 aufgeweckt bzw. initialisiert, wenn von einer Rampenspannung Uᵣᵢ (i=1, ... N) der vorgegebene Schwellwert SW₁ erreicht wird.

Mit jedem Aufwecken eines Mikrocontrollers 3 wird eine erste Statusinformation gemäß Schritt S2 an die Auswerteeinheit 10 drahtlos gesendet, wobei diese erste Statusinformation eine Identifizierungsnummer aufweist, anhand derer die Herkunft von dem jeweiligen Photovoltaikmodul 1 bzw. Mikrocontroller 3 dieser ersten Statusinformation bestimmt werden kann.

Gemäß einem Schritt S3 wird der Zeitpunkt tᵢ (i=1, ... N) des Eingangs der ersten Statusinformation zusammen mit der zugehörigen Identifizierungsnummer des Photovoltaikmoduls 1 von der Auswerteeinheit 10 registriert und gespeichert und gleichzeitig prüft die Auswerteeinheit 10, ob von allen Mikrocontrollern 3 der Photovoltaikmodule 1 innerhalb einer vorgegebenen Zeitdauer eine erste Statusinformation eingegangen ist. Diese Zeitdauer beginnt mit dem Zeitpunkt tᵢ der ersten eingehenden ersten Statusinformation; gemäß Figur 3 ist dies der Zeitpunkt t₁.

Bei einer großen Anzahl von Photovoltaikmodulen 1 ist es möglich, dass mehrere Photovoltaikmodule 1 gleichzeitig eine erste Statusinformation abgeben, so dass diese ersten Statusinformationen durch Kollision verloren gehen können.

Falls wenigstens eine erste Statusinformation fehlt, werden die fehlenden Photovoltaikmodule 1 über den jeweiligen Mikroprozessor 3 aufgerufen, eine Statusinformation abzugeben. Erzeugen die aufgerufenen Photovoltaikmodule 1 eine Statusinformation, wird davon ausgegangen, dass die ersten Statusinformationen durch Kollision verloren gegangen sind. Wenn sich jedoch ein aufgerufenes Photovoltaikmodul 1 nicht meldet, wird davon ausgegangen, dass dessen Modulspannung U den vorgegebenen Schwellwert SW₁ noch nicht erreicht hat, bei dem der Mikrocontroller 3 als Prüfeinrichtung selbstständig aktiviert würde.

Wurden die ersten Statusinformationen aller Prüfeinrichtungen 3 von der Auswerteeinheit 10 empfangen, erfolgt gemäß einem Schritt S4 eine Auswertung der eingegangenen Zeitpunkte tᵢ (i=1, ... N), indem zunächst die Zeitdifferenzen Δtᵢ (i= 1, ... (N-1)zwischen dem frühesten Zeitpunkt und jeweils den späteren Zeitpunkten bestimmt werden. In dem Ausführungsbeispiel gemäß Figur 3 mit N=3 wären dies die oben erläuterten Zeitdifferenzen Δt₁=|t₁-t₂| und Δt₂=|t₁-t₃|. In Abhängigkeit dieser Zeitdifferenzen wird bestimmt, welche Photovoltaikmodule 1 einen zu geringen Wirkungsgrad aufweisen.

Hierzu können bspw. diese Zeitdifferenzen Δti (i= 1, ... (N-1)) mit einem Zeitschwellwert SW₂ verglichen werden. Wird dieser Zeitschwellwert SW₂ von einem Wert einer Zeitdifferenz Δtᵢ überschritten, wird dasjenige Photovoltaikmodul 1 als mit zu geringem Wirkungsgrad erkannt, von dessen Mikrocontroller 3 zum späteren Zeitpunkt tᵢ dieser Zeitdifferenz Δtᵢ die erste Statusinformation von der Auswerteeinheit 10 empfangen wurde.

Ein zu geringer Wirkungsgrad kann auf Alterserscheinungen oder defekte Solarzellen des jeweiligen Photovoltaikmoduls 1 zurückgeführt werden. Auch eine Verschmutzung oder eine anderweitig erzeugte Beschattung kann einen Rückgang des Wirkungsgrades bewirken.

Nach einer Installation einer Photovoltaikanlage 100, bspw. gemäß Figur 1, sind die vorhandenen Photovoltaikmodule 1 mit ihren Identifizierungsnummern in der Auswerteeinheit 10 zu hinterlegen, damit einerseits eine Prüfung der Anzahl der eingehenden ersten Statusinformationen auf Vollständigkeit und andererseits von der Auswerteeinheit 10 jedes Photovoltaikmodul 1 angesprochen werden kann, um bspw. elektrische Parameter über die zugeordneten Prüfeinrichtungen 3 abzufragen.

Hierzu wird von der Auswerteeinheit 10 bei Erstinbetriebnahme ein Lernmodus durchgeführt, indem zunächst sukzessiv alle Identifizierungsnummern eines zur Identifizierung von Photovoltaikmodulen vorgesehenen Nummernkreises sukzessive aufgerufen werden. Diejenigen Photovoltaikmodule 3, welche ihre Identifikationsnummer in dem Aufruf der Auswerteeinheit erkennen, übermitteln ihrerseits an die Auswerteeinheit 10 ihre Identifikationsnummer, die von der Auswerteinheit 10 gespeichert und somit als Photovoltaikmodul 1 der Photovoltaikanlage 100 registriert werden. Damit werden von der Auswerteeinheit 10 nur noch diese registrierten Nummern abgerufen, wodurch sich der Umfang des Datenverkehrs zwischen der Auswerteeinheit 10 und den Prüfeinrichtungen 3 erheblich reduzieren lässt.

Die gemäß der Figur 1 erläuterte drahtlose Kommunikation zwischen den Prüfeinrichtungen 3 und der Auswerteeinheit 10 kann auch drahtgebunden, bspw. über die elektrischen Leitungen 2 und 2a durchgeführt werden.

## Patentansprüche

1. Verfahren zur Überwachung von in Reihe verschalteten Photovoltaikmodulen (1), indem mindestens eine Statusinformation des jeweiligen Photovoltaikmoduls (1) detektiert und an eine Auswerteeinheit (10) übermittelt wird,
**dadurch gekennzeichnet, dass**
- die bei zunehmender Beleuchtungsstärke von den jeweiligen Photovoltaikmodulen (1) erzeugte Rampenspannung (Ur, Ur1, Ur2) mit einem vorgegebenen Schwellwert (SW₁) verglichen wird,
- bei Erreichen des vorgegebenen Schwellwertes (SW₁) durch die ansteigende Rampenspannung (Uᵣ₁, Uᵣ₂, Uᵣ₃) eine Übermittlung einer ersten Statusinformation an die Auswerteeinheit (10) durchgeführt wird, und
- zur Bewertung der Leistungsfähigkeit eines Photovoltaikmoduls (1) die Zeitpunkte (t₁, t₂, t₃) des Empfangs der ersten Statusinformation der jeweiligen Photovoltaikmodule (1) durch die Auswerteeinheit (10) ausgewertet werden.

2. Verfahren nach Anspruch 1,
**dadurch gekennzeichnet, dass** zur Bewertung der Zeitpunkte (t₁, t₂, t₃) des Empfangs der ersten Statusinformationen die Zeitdifferenzen (Δt₁, Δt₂) zwischen dem frühesten Zeitpunkt (t₁) und den jeweiligen späteren Zeitpunkten (t₂, t₃) bestimmt und ausgewertet werden.

3. Verfahren nach Anspruch 1 oder 2,
**dadurch gekennzeichnet, dass** die Übermittlung der ersten Statusinformation ein Identifikationsmerkmal, vorzugsweise eine Identifikationsnummer des jeweiligen Photovoltaikmoduls (1) umfasst.

4. Verfahren nach Anspruch 3,
**dadurch gekennzeichnet, dass**
- die Auswerteeinheit (10) für die Erstinbetriebnahme der Photovoltaikmodule (1) alle Identifizierungsnummern eines zur Identifizierung von Photovoltaikmodulen (1) vorgesehenen Nummernkreises sukzessive aufruft,
- diejenigen Photovoltaikmodule (1), welche ihre Identifikationsnummer in dem Aufruf der Auswerteeinheit erkennen, ihrerseits an die Auswerteeinheit (10) ihre Identifikationsnummer übermitteln, und
- diejenigen Identifizierungsnummern von der Auswerteinheit (10) gespeichert werden, die ein Photovoltaikmodul (1) übermittelt hat.

5. Verfahren nach einem der vorhergehenden Ansprüche,
**dadurch geken** (10) **nzeichnet,** dass die Übermittlung der ersten Statusinformation an die Auswerteeinheit (10) drahtlos oder drahtgebunden durchgeführt wird.

6. Photovoltaikanlage (100) zur Durchführung des Verfahrens nach einem der vorhergehenden Ansprüche, mit in Reihe geschalteten Photovoltaikmodulen (1) und einer Auswerteeinheit (10), wobei die Photovoltaikmodule (1) über elektrische Verbindungsmittel (2) seriell verschaltet sind und jedes Photovoltaikmodul (1) eine Prüfeinrichtung (3) umfasst,
**dadurch gekennzeichnet, dass**
- zur Erfassung der von jedem Photovoltaikmodul (1) bei zunehmender Lichtintensität erzeugten Rampenspannung (Uᵣ, Uᵣ₁, Uᵣ₂) jede Prüfeinrichtung (3) mit dem ihr zugeordneten Photovoltaikmodul (1) elektrisch verbunden ist,
- jede Prüfeinrichtung (3) ausgebildet ist, die Rampenspannung (Uᵣ, Uᵣ₁, Uᵣ₂) mit einem vorgegebenen Schwellwert (SW₁) zu vergleichen und bei Erreichen dieses vorgegebenen Schwellwertes (SW₁) eine Übermittlung einer ersten Statusinformation an die Auswerteeinheit (10) durchzuführen, und
- zur Bewertung der Leistungsfähigkeit eines Photovoltaikmoduls (1) die Auswerteeinheit (10) ausgebildet ist, die Zeitpunkte (t₁, t₂, t₃) des Empfangs der ersten Statusinformation der jeweiligen Prüfeinrichtung (3) auszuwerten.

7. Photovoltaikanlage nach Anspruch 6,
**dadurch gekennzeichnet, dass** zur Bewertung der Zeitpunkte (t₁, t₂ t₃) des Empfangs der ersten Statusinformationen die Auswerteeinheit (10) ausgebildet ist, die Zeitdifferenz (Δt₁, Δt₂) zwischen dem frühesten Zeitpunkt (t₁) und den jeweiligen späteren Zeitpunkten (t₂, t₃) zu bestimmen.

8. Photovoltaikanlage nach einem der Ansprüche 6 oder 7, **dadurch gekennzeichnet, dass** zur Überwachung der Rampenspannung (Uᵣ, Uᵣ₁, Uᵣ₂) die Prüfschaltung (3) eine Brownout-Detektor-Schaltung aufweist, die die Prüfeinrichtung (3) veranlasst eine Übermittlung einer ersten Statusinformation an die Auswerteeinheit (10) durchzuführen, wenn die Rampenspannung (Uᵣ, Uᵣ₁, Uᵣ₂) eines Photovoltaikmoduls (1) den vorgegebenen Schwellwert (SW₁) erreicht.

9. Photovoltaikanlage nach Anspruch 8,
**dadurch gekennzeichnet, dass** die Prüfschaltung (3) als Mikrocontroller ausgebildet ist, dessen Brownout-Detektor-Schaltung ein POR (Power-On-Reset)-Signal zur Initialisierung des Mikrocontrollers (3) erzeugt, wenn die Rampenspannung (Uᵣ, Uᵣ₁, Uᵣ₂) eines Photovoltaikmoduls (1) den vorgegebenen Schwellwert (SW₁) erreicht.
